# EUROPÄISCHE PATENTSCHRIFT

(11) **EP 1 490 246 B1**
(45) Veröffentlichungstag und Bekanntmachung des Hinweises auf die Patenterteilung: **06.09.2006**
(21) Anmeldenummer: 03720334.6
(22) Anmeldetag: 14.03.2003
(51) Int. Cl.: B60Q 9/00

(54) **KRAFTFAHRZEUG MIT SPURWECHSELASSISTENZ-SYSTEM**
MOTOR VEHICLE WITH LANE-SWITCHING ASSISTANCE SYSTEM
VEHICULE EQUIPE D'UN SYSTEME D'ASSISTANCE POUR CHANGER DE VOIE

(30) Priorität: 22.03.2002 DE 10212756
(43) Veröffentlichungstag der Anmeldung: 29.12.2004
(73) Patentinhaber: AUDI AG, 85045 Ingolstadt (DE)
(72) Erfinder: POPKEN, Markus, 85139 Wettstetten (DE); VUKOTICH, Alejandro, 85049 Ingolstadt (DE)
(74) Vertreter: Thielmann, Frank
(86) Internationale Anmeldenummer: PCT/EP2003/002665
(87) Internationale Veröffentlichungsnummer: WO 2003/080390

(56) Entgegenhaltungen:
- DE-A- 3 232 160
- DE-A- 19 818 259
- US-A- 5 521 579

## Beschreibung

Die Erfindung betrifft ein Kraftfahrzeug, mit einem Spurwechselassistenz-System zur Erfassung einer Lücke im Fahrzeugstrom auf einer benachbarten Fahrspur umfassend eine Einrichtung zum Erfassen etwaiger Kraftfahrzeuge in einem seitlichen und rückwärtigen Fahrzeugbereich, wobei das Spurwechselassistenz-System zum Ermitteln einer Mindestbeschleunigung zum gefahrlosen Einfahren in eine ermittelte Lücke ausgebildet ist.

Solche Spurwechselassistenz-Systeme sind bekannt und befinden sich kurz vor der Serienreife. Mit ihnen ist es möglich, eine Lücke in einem Fahrzeugstrom auf einer benachbarten Fahrspur, beispielsweise der linken Fahrspur einer Autobahn, zu erkennen, in ihrer Größe zu bestimmen und zu ermitteln, ob ein gefahrloses Einscheren möglich ist oder nicht. Lücken werden also in ihrer Eigenschaft klassifiziert. Es gibt Lücken, die hinreichend groß sind, so dass das Kraftfahrzeug problemlos ohne zusätzliche Beschleunigung einscheren kann, es gibt weiterhin Lücken, die enger sind, und in die ein Einscheren nur bei einer hinreichenden Beschleunigung möglich ist, und es gibt Lücken die zu klein sind, in die also nicht gefahrlos eingeschert werden kann. Dem Fahrer wird bei bekannten Spurwechselassistenz-Systemen jedoch lediglich angezeigt, ob ein Spurwechsel gefahrlos möglich ist, oder ob er nicht möglich ist.

Aus US-A 5,521,579 ist ein Kraftfahrzeug gemäß dem Oberbegriff von Anspruch 1 bekannt. Es erfolgt dort die Berechnung der benötigten Beschleunigungswerte, die zum Einfahren in eine detektierte Lücke erforderlich sind. Diese Beschleunigungswerte werden dem Fachmann auch an einer Anzeige ausgegeben, so dass er entsprechend handeln kann.

Aus DE 32 32 170 A ist ein Kraftfahrzeug bekannt, bei dem zur Anzeige des optimalen Kraftstoffverbrauchs ein haptisch erfassbares Signal über das Gaspedal durch eine Änderung der Rückstellkraft gegeben wird. Auch besteht die Möglichkeit, durch ein Vibrieren des Gaspedals den Fahrer dahingehend zu informieren, dass er im Hinblick auf den Kraftstoffverbrauch einen unvorteilhaften Gang eingelegt hat.

Schließlich beschreibt DE 198 18 259 A ein Spurwechselassistenz-System, mittels dem errechnet wird, ob bei der gegenwärtigen Verkehrssituation in Abhängigkeit von der momentanen Geschwindigkeit des eigenen Kraftfahrzeugs ein Sicherheitsabstand zu einem benachbarten Fahrzeug unterschritten wird. Ist dem so, erzeugt eine Warnvorrichturig oder ein Mikroprozessor ein haptisches Moment am Lenkrad, um den Fachmann darauf aufmerksam zu machen.

Der Erfindung liegt damit das Problem zu Grunde, ein Kraftfahrzeug mit verbesserter Fahrerinformation anzugeben.

Zur Lösung dieses Problems ist bei einem Kraftfahrzeug der eingangs genannten Art erfindungsgemäß vorgesehen, dass eine Einrichtung zum Erzeugen eines dem Fahrer zu gebenden haptisch erfassbaren Signals, das die zu erreichende oder erreichte Mindestbeschleunigung, die laufend berechnet wird, anzeigt, vorgesehen ist, welches Signal gegeben wird, wenn die erforderliche Mindestbeschleunigung in der Beschleunigungsphase erreicht worden ist, oder welches Signal solange während der Beschleunigungsphase gegeben wird, bis die Mindestbeschleunigung erreicht ist.

Ist eine Lücke zu klein, um ohne Beschleunigung in sie hineinfahren zu können, so wird beim erfindungsgemäßen Kraftfahrzeug die hierfür erforderliche Mindestbeschleunigung seitens des Spurwechselassistenz-Systems laufend berechnet. Dies kann dem Fahrer beispielsweise visuell angezeigt werden, in dem die Möglichkeit des Einfahrens in die Lücke bei gleichzeitiger Beschleunigung optisch und/oder akustisch über eine geeignete Informationseinrichtung, beispielsweise Lampe oder Lautsprecher oder Display oder dergleichen angezeigt wird. Um nun dem Fahrer ferner eine Information und damit die Sicherheit zu geben, dass er hinreichend beschleunigt oder eine hinreichende Mindestbeschleunigung erreicht wurde, ist ferner eine Einrichtung zum Erzeugen eines dem Fahrer zu gebenden haptisch erfassbaren Signals vorgesehen, die ihm anzeigt, dass die Mindestbeschleunigung erreicht ist oder dass sie noch nicht erreicht ist. Abhängig von dieser Information weiß der Fahrer also, dass er zum gefahrlosen Einscheren hinreichend beschleunigt hat, so dass er letztlich den Einfahrvorgang gefahrlos fortsetzen kann.

Das erfindungsgemäße Kraftfahrzeug bietet somit eine echte Fahrunterstützung vor allem für unsichere oder ältere Fahrer, da ihnen eine eindeutig erfassbare, aus sicherheitstechnischen Gesichtspunkten sehr relevante Information gegeben wird, die ein gefahrloses Wechseln der Fahrspur ermöglicht.

Nach einer ersten Erfindungsausgestaltung kann die Einrichtung zum Erzeugen des Signals in Form eines spürbaren Druckpunkts oder einer Druckschwelle beim Drücken des Gaspedals ausgebildet sein. Über das Gaspedal bestimmt der Fahrer die Beschleunigung des Kraftfahrzeugs. Wird ihm nun beim Betätigen des Gaspedals das haptisch erfassbare Signal in Form eines spürbaren Druckpunkts oder einer Druckschwelle gegeben, so kann er genau erkennen, wann er das Gaspedal weit genug für die errechnete Mindestbeschleunigung durchgedrückt hat. Es kann ihm dabei eine Gegenkraft oder eine Widerstandsschwelle mittels dieser Einrichtung gesetzt werden, die entweder bei Erreichen der Mindestbeschleunigung (entsprechend einem hinreichenden Durchdrücken des Gaspedals) kurz erzeugt und überwunden werden muss, auch ist es möglich, die Gegenkraft von Anfang an zu erzeugen und den weiteren Pedalweg ab Erreichen der Mindestbeschleunigung ohne Gegenkraft und damit weicher zu gestalten. Auch eine Ausgestaltung mit einer unbeeinflussten Pedalbewegung zu Beginn bis zum Erreichen der hinreichenden Mindestbeschleunigung und einer ab da erzeugten Gegenkraft ist möglich. Durch die weiterhin dauernd erfasste Lücke und ihre Größe kann der Druckpunkt bzw. die Druckschwelle bei einer Änderung der errechneten Mindestbeschleunigung auch der Änderung angepasst werden. Die Einrichtung selbst kann hierfür einen ansteuerbaren Aktuator, insbesondere einen Elektromotor umfassen, der den Druckpunkt oder die Druckschwelle erzeugt. Nach dieser Erfindungsausgestaltung findet also die Anzeige oder die Gabe des haptischen Signals direkt an dem Ort statt, an dem der Fahrer über die Längsführung des Fahrzeugs bestimmt, nämlich am Gaspedal. Dabei spielt es insofern keine Rolle, ob es sich um ein Gaspedal mit einem Bowdenzug oder um ein in seiner Bewegung elektrisch überwachtes Gaspedal handelt.

Alternativ zu dieser Ausführungsform kann die Einrichtung zum Erzeugen des Signals in Form eines am Lenkrad oder am Fahrersitz spürbaren Vibrationssignals ausgebildet sein, das heißt der Fahrer merkt beispielsweise über die am Lenkrad befindlichen Hände, wann er hinreichend beschleunigt hat, beispielsweise der Gestalt, dass ihm bei Erreichen der Mindestbeschleunigung ein Vibrationssignal gegeben wird, oder dass ein solches dann erst aufhört etc. Entsprechend kann dieses Vibrationssignal auch am Fahrersitz, sei es an der Sitzfläche oder der Rückenfläche gegeben werden.

Wie bereits beschrieben ist es zweckmäßig, die Möglichkeit des Einfahrens in die Lücke bei gleichzeitiger Beschleunigung optisch und/oder akustisch anzuzeigen. Der Fahrer kann dann selbst entscheiden, ob er nun unter hinreichender Beschleunigung in die Lücke einfahren möchte oder nicht. Da die erforderliche Mindestbeschleunigung über das Spurwechselassistenz-System laufend ermittelt wird, was aufgrund der sich zumeist kontinuierlich ändernden Lückenkonfiguration erforderlich ist, ist die Anzeige dieser Möglichkeit sehr zweckmäßig, da mitunter auch die Situation eintreten kann, dass die Lücke zu klein wird, um trotz hinreichender Beschleunigung in sie hineinfahren zu können. Der Fahrer wird also kontinuierlich darüber entrichtet, ob überhaupt ein Spurwechsel unter Beschleunigung möglich ist oder nicht, falls dies möglich ist und er sich dazu entschließt, wird ihm das haptische Signal gegeben. Wird ein Einfahren trotz Beschleunigung wegen einer zu klein werdenden Lücke plötzlich gefahrvoll oder nicht mehr möglich, so kann dem Fahrer ein deutliches Warnsignal gegeben werden.

Dabei kann es vorteilhaft sein, wenn die Einrichtung zum Erzeugen des haptisch erfassbaren Signals nur bei Vorliegen eines eine Spurwechselabsicht anzeigenden Signals ausgebildet ist. Dies hat den Zweck, dass das haptische Signal nur dann gegeben wird, wenn der Fahrer dies letztlich auch benötigt, nämlich wenn er tatsächlich die Spur wechseln möchte. Denn nicht immer wünscht der Fahrer einen Fahrspurwechsel wenn dies möglich ist. Auch besteht die Möglichkeit, das Spurwechselassistenz-System erst bei erfasster Spurwechselabsicht überhaupt einzuschalten, so dass vermieden wird, dass dem Fahrer kontinuierlich die Wechselmöglichkeit optisch oder akustisch visualisiert wird, auch dann, wenn er überhaupt keine Wechselabsicht hat.

Die Spurwechselabsicht kann beispielsweise bei einer Betätigung des Blinkhebels am Lenkrad erzeugt werden, wenn also der Fahrer wie üblich blinkt, um den Spurwechsel nach außen hin anzuzeigen. Falls der Fahrer vor dem Spurwechsel nicht blinkt und einfach mit dem Ausscheren beginnt kann eine Spurwechselabsichtserfassung über Mittel zur Erfassung einer Änderung des Lenkwinkels der Lenkeinrichtung des Kraftfahrzeugs erfolgen, die bei einer Erfassung einer Lenkwinkeländerung das eine Spurwechselabsicht anzeigende Signal erzeugen. Hierzu ist eine geeignete Sensorik vorhanden, über die eine solche Lenkwinkeländerung detektiert werden kann. Zur Erfassung der Spurwechselabsicht kann alternativ oder zusätzlich zur Lenkwinkelerfassung auf Daten anderer im Kraftfahrzeug vorhandene Sensoren oder Systeme zugegriffen werden; beispielsweise auf ein Lane-Departure-Warning-System (LDW), bei dem mittels einer Kamera die Fahrspur aufgenommen und durch Bildanalysen ein Abweichen von der Fahrspur ermittelt wird. Diese Information kann dann allein oder z.B. in Verbindung mit der Information über eine Lenkwinkeländerung zum Auslösen der erfindungsgemäßen Prozedur führen.

Weiterhin ist es zweckmäßig, wenn das Spurwechselassistenz-System zum Ermitteln der erforderlichen Beschleunigung unter Berücksichtigung eines oder mehrerer fahrzeugspezifischer Informationssignale ausgebildet ist. Beispielsweise kann hier das Gewicht des Fahrzeugs, die Beladung, die Motor- und Getriebeleistung etc. mit in die Berechnung der Mindestbeschleunigung und mithin in die Entscheidung, ob ein Einfahren in eine Lücke unter hinreichender Beschleunigung überhaupt möglich ist, einfließen. Zusätzlich oder alternativ zu diesen fahrzeugspezifischen Informationssignalen kann das Spurwechselassistenz-System auch zum Ermitteln der erforderlichen Beschleunigung unter Berücksichtigung eines oder mehrerer umgebungsspezifischer Informationssignale ausgebildet sein. Diese berücksichtigen beispielsweise, ob die Fahrbahn nass oder trocken ist, ob Schnee liegt, etc. Hierfür können ohnehin zumeist serienmäßig vorhandene Sensoren wie beispielsweise ein Regensensor oder im Rahmen anderer Systeme verwendete Sensoren verwendet werden.

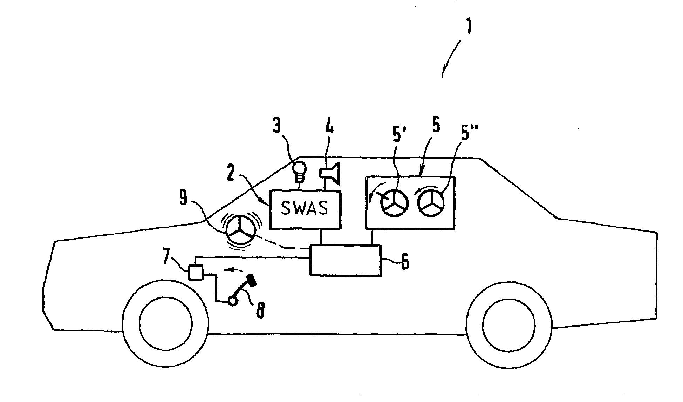

Weitere Vorteile, Merkmale und Einzelheiten der Erfindung ergeben sich aus dem im Folgenden beschriebenen Ausführungsbeispiel sowie anhand der Zeichnung.

In dieser ist in Form einer Prinzipskizze ein erfindungsgemäßes Kraftfahrzeug 1 gezeigt, wobei lediglich die für die erfindungsgemäß vorgeschlagene Überholhilfe erforderlichen Komponenten dargestellt sind. Das Kraftfahrzeug 1 umfasst ein Spurwechselassistenz-System 2, das durch "SWAS" (SWAS = Spurwechselassistenz-System) gekennzeichnet ist. Dieses Spurwechselassistenz-System dient zum Überwachen des auf einer benachbarten Fahrspur fließenden Fahrzeugstroms und zum Ermitteln etwaiger in diesem Fahrzeugstrom gebildeter Lücken, in die das Kraftfahrzeug 1 einscheren kann oder nicht. Die Lücken werden erfasst, in ihrer Länge bestimmt und klassifiziert als solche, in die ein Einscheren ohne Mindestbeschleunigung, mit Mindestbeschleunigung oder nicht möglich ist. Hierzu umfasst das Spurwechselassistenz-System 2 mehrere nicht näher gezeigte Radarsensoren oder eine Videoeinrichtung etc., über die die erforderlichen Informationen aufgenommen und in einer geeigneten zentralen Verarbeitungseinheit bestimmt werden können.

Ist nun eine Lücke detektiert und kann in diese Lücke, die über das Spurwechselassistenz-System 2 kontinuierlich erfasst und in ihrer Länge berechnet wird, bei einer Mindestbeschleunigung eingefahren werden, so wird diese Möglichkeit dem Kraftfahrer angezeigt. Hierzu kann beispielsweise eine optische Anzeige 3 z.B. am Armaturenbrett vorgesehen sein, denkbar ist auch eine akustische Anzeige 4, die den Kraftfahrer auf die Möglichkeit des Einfahrens bei gleichzeitiger Beschleunigung hinweist.

Ferner ist eine Einrichtung 5 zur Erfassung einer Spurwechseiabsicht vorgesehen. Die Spurwechselabsicht kann entweder dadurch erfolgen, dass der Kraftfahrer wie bei 5' dargestellt ist, den Blinkhebel betätigt, um seine Spurwechselabsicht nach außen hin deutlich zu machen. Wird also der Blinkhebel betätigt so wird ein entsprechendes Spurwechselabsichtssignal erzeugt. Zusätzlich oder alternativ kann, wie bei 5" dargestellt ist, die Spurwechselabsicht auch durch Erfassen einer Lenkwinkeländerung erfolgen, wenn also der Fahrer nicht wie üblich den Blinker zum Spurwechseln betätigt, sondern einfach mit dem Ausscheren beginnt. Um einen Spurbezug zur Fahrspur zu haben um auszuschließen, dass der Fahrer lediglich einer Kurve folgt, kann zusätzlich z.B. das Informationssignal einer Fahrspurerfassungseinrichtung, z.B. einem LDW-System (hier nicht näher gezeigt) verwendet werden, um eindeutig zu erkennen, dass es sich um einen tatsächlichen Spurwechsel handelt. Auch könnte der Fahrer beobachtet werden, ob er in den Rück- oder Seitenspiegel unmittelbar vor der Lenkwinkeländerung geblickt hat, was er bei einer Kurvenfahrt normalerweise nicht macht.

In jedem Fall wird ein erfasstes Spurwechselabsichtssignal an eine Einrichtung 6 zum Erzeugen eines dem Fahrer zu gebenden haptisch erfassbaren Signals gegeben. Dieser Einrichtung 6, bei der es sich um ein geeignetes Steuergerät handeln kann, wird ebenfalls von dem Spurwechselassistenz-System 2 ein Signal gegeben, das die Mindestbeschleunigung angibt, mit welcher in die detektierte Lücke eingefahren werden kann. Die Einrichtung 6 errechnet nun, welcher Qualität das von ihr zu erzeugende, dem Fahrer zu gebende haptisch erfassbare Signal sein muss, das heißt, wann dieses gegeben werden muss, um dem Fahrer anzuzeigen, dass er die Mindestbeschleunigung erreicht hat. Hierzu ist der Einrichtung 6 ein Aktuator 7 beispielsweise in Form eines kleinen Elektromotors zugeordnet, der mit dem Gaspedal 8 des Kraftfahrzeugs, das zum Beschleunigen wie durch den Pfeil angezeigt durchzutreten ist, zusammenwirkt. Dieser Aktuator 7 wird nun von der Einrichtung 6 so angesteuert, dass er beispielsweise bei einem hinreichend weiten Durchtreten des Gaspedals und mithin also bei Erreichen einer hinreichenden, von dem Spurwechselassistenz-System 2 errechneten Mindestbeschleunigung einen Druckpunkt, also einen Gegendruck oder einen Widerstand erzeugt und dem Gaspedal 8 entgegensetzt. Der Fahrer spürt diesen Druckpunkt oder diese Druckschwelle über den das Gaspedal durchtretenden Fuß und kann so erkennen, dass er nunmehr die hinreichende Mindestbeschleunigung entweder erreicht hat oder kurz davor steht und er lediglich über diesen Druckpunkt hinaus das Gaspedal durchtreten muss. Das heißt, der Fahrer erfasst also haptisch über den das Gaspedal betätigenden Fuß, wann er die Mindestbeschleunigung erreicht hat. Sobald der Fahrer beispielsweise hinreichend weit das Gaspedal durchgetreten hat wird die Einrichtung 6 wieder zurückgesetzt und der Aktuator 7 nicht mehr angesteuert. Selbstverständlich besteht die Möglichkeit, wenn der Fahrer die Beschleunigung wieder zurücknimmt und erneut beschleunigen möchte, das gesamte Ansteuerverfahren erneut beginnen zu lassen, da wie beschrieben die Lücke kontinuierlich sensiert wird und bei Vorliegen eines Spurwechselabsichtssignals eine erneute Ansteuerung des Aktuators 7 erfolgen kann.

Anstelle des Aktuators 7 (oder zusätzlich dazu) kann über die Einrichtung 6 auch, wie gestrichelt angedeutet ist, das haptische Signal in Form eines Vibrationssignals beispielsweise am Lenkrad 9 gegeben werden. Das heißt der Fahrer merkt über die am Lenkrad befindlichen Hände, ob beziehungsweise wann er die Mindestbeschleunigung erreicht hat.

Abschließend ist noch darauf hinzuweisen, dass das Spurwechselassistenz-System zum Ermitteln der erforderlichen Mindestbeschleunigung unter Berücksichtigung fahrzeugspezifischer und/oder umgebungsspezifischer Informationssignale ausgebildet sein kann. In diese Berechnung können beispielsweise Informationen wie das Fahrzeuggewicht, die Motor- oder Getriebeleistung oder aber Informationen über die Fahrbahnbeschaffenheit (trocken, nass, glatt) mit eingehen, so dass die errechnete Mindestbeschleunigung noch genauer auf die tatsächlichen Gegebenheiten abgestellt werden kann. Hierzu sind geeignete Sensoren mit dem Spurwechselassistenz-System 2 vernetzt, was nicht näher dargestellt ist.

Insgesamt gibt die Erfindung dem Kraftfahrer eine von ihm zweckmäßigerweise wahlweise zuschaltbare Überhol- oder Einfahrhilfe, die ihm im Falle einer möglicherweise etwas kritischen Einfahrsituation in eine Lücke sicher anzeigt, wann er mit einer hinreichenden Beschleunigung gefahrlos in die Lücke einfahren kann.

## Patentansprüche

1. Kraftfahrzeug, mit einem Spurwechselassistenz-System zur Erfassung einer Lücke im Fahrzeugstrom auf einer benachbarten Fahrspur umfassend eine Einrichtung zum Erfassen etwaiger Kraftfahrzeuge in einem seitlichen und rückwärtigen Fahrzeugbereich, wobei das Spurwechselassistenz-System (2) zum Ermitteln einer Mindestbeschleunigung zum gefahrlosen Einfahren in eine ermittelte Lücke ausgebildet ist,
**dadurch gekennzeichnet,**
**dass** eine Einrichtung (6) zum Erzeugen eines dem Fahrer zu gebenden haptisch erfassbaren Signals, das die zu erreichende oder erreichte Mindestbeschleunigung, die laufend berechnet wird, anzeigt, vorgesehen ist, welches Signal gegeben wird, wenn die erforderliche Mindestbeschleunigung in der Beschleunigungsphase erreicht worden ist, oder welches Signal solange während der Beschleunigungsphase gegeben wird, bis die Mindestbeschleunigung erreicht ist.

2. Kraftfahrzeug nach Anspruch 1,
**dadurch gekennzeichnet,**
**dass** die Einrichtung (6) zum Erzeugen des Signals in Form eines spürbaren Druckpunkts oder einer Druckschwelle beim Drücken des Gaspedals (8) ausgebildet ist.

3. Kraftfahrzeug nach Anspruch 2,
**dadurch gekennzeichnet,**
**dass** die Einrichtung (6) einen ansteuerbaren Aktuator (7), insbesondere einen Elektromotor umfasst, der den Druckpunkt oder die Druckschwelle erzeugt.

4. Kraftfahrzeug nach Anspruch 1,
**dadurch gekennzeichnet,**
**dass** die Einrichtung (6) zum Erzeugen des Signals in Form eines am Lenkrad (9) oder am Fahrersitz spürbaren Vibrationssignals ausgebildet ist.

5. Kraftfahrzeug nach einem der vorangehenden Ansprüche,
**dadurch gekennzeichnet,**
**dass** eine ein mögliches Einfahren in die Lücke bei gleichzeitiger Bescheunigung optisch und/oder akustisch anzeigende Informationseinrichtung (3, 4) vorgesehen ist.

6. Kraftfahrzeug nach einem der vorangehenden Ansprüche,
**dadurch gekennzeichnet,**
**dass** die Einrichtung (6) zum Erzeugen des haptisch erfassbaren Signals nur bei Vorliegen eines eine Spurwechselabsicht anzeigenden Signals ausgebildet ist.

7. Kraftfahrzeug nach Anspruch 6,
**dadurch gekennzeichnet,**
**dass** das eine Spurwechselabsicht anzeigende Signal bei einer Betätigung des Blinkhebels (5') erzeugt wird.

8. Kraftfahrzeug nach Anspruch 6,
**dadurch gekennzeichnet,**
**dass** Mittel (5") zur Erfassung einer Änderung des Lenkwinkels der Lenkeinrichtung des Kraftfahrzeugs (1) vorgesehen sind, die bei einer Erfassung einer Lenkwinkeländerung das eine Spurwechselabsicht anzeigende Signal erzeugen.

9. Kraftfahrzeug nach Anspruch 8,
**dadurch gekennzeichnet,**
**dass** die Gabe des haptisch erfassbaren Signals in Abhängigkeit wenigstens eines Informationssignals eines Fahrspurüberwachungssystems, das als Bezugspunkt für die Lenkwinkeländerung dient, insbesondere eines Informationssignals eines Lane-Departure-Warning-Systems erfolgt.

10. Kraftfahrzeug nach Anspruch 6,
**dadurch gekennzeichnet,**
**dass** Mittel zur Erfassung und Überwachung der Fahrspur, insbesondere ein Lane-Departure-Warning-System vorgesehen wird, die bei Erfassung eines Verlassens der Fahrspur das eine Spurwechselabsicht anzeigende Signal erzeugen.

11. Kraftfahrzeug nach einem der vorangehenden Ansprüche,
**dadurch gekennzeichnet,**
**dass** das Spurwechselassistenz-System (2) zum Ermitteln der erforderlichen Beschleunigung unter Berücksichtigung eines oder mehrerer fahrzeugspezifischer Informationssignale ausgebildet ist.

12. Kraftfahrzeug nach einem der vorangehenden Ansprüche,
**dadurch gekennzeichnet,**
**dass** das Spurwechselassistenz-System (2) zum Ermitteln der erforderlichen Beschleunigung unter Berücksichtigung eines oder mehrerer umgebungsspezifischer Informationssignale ausgebildet ist.

## Claims

1. Motor vehicle with a lane-switching assistance system for detecting a gap in the flow of traffic on an adjacent lane, comprising a device for detecting any motor vehicles within range to the side and to the rear of the vehicle, the lane-switching assistance system (2) being designed to ascertain a minimum acceleration necessary for merging safely into a gap that has been ascertained,
**characterised by** the provision of a device (6) for generating a haptically perceptible signal to the driver that indicates the minimum acceleration that needs to be attained or has been attained, said acceleration being continuously computed, and which signal is given once the necessary minimum acceleration has been attained in the acceleration phase, or which signal is given during the acceleration phase until the minimum acceleration has been attained.

2. Motor vehicle according to claim 1,
**characterised in that** the device (6) for generating the signal is configured in the form of a noticeable pressure point or a pressure threshold when the accelerator pedal (8) is depressed.

3. Motor vehicle according to claim 2,
**characterised in that** the device (6) comprises a controllable actuator (7), more particularly an electric motor, which generates the pressure point or pressure threshold.

4. Motor vehicle according to claim 1,
**characterised in that** the device (6) for generating the signal is configured in the form of a vibration signal that is noticeable at the steering wheel (9) or at the driver's seat.

5. Motor vehicle according to any one of the preceding claims,
**characterised by** the provision of an information device (3, 4) which indicates visually and/or acoustically when it is possible to merge into the gap whilst simultaneously accelerating.

6. Motor vehicle according to any one of the preceding claims,
**characterised in that** the device (6) is designed to generate the haptically perceptible signal only in the presence of a signal indicating an intention to switch lanes.

7. Motor vehicle according to claim 6,
**characterised in that** the signal indicating an intention to switch lanes is generated whenever the flashing direction indicator lever (5') is operated.

8. Motor vehicle according to claim 6,
**characterised by** the provision of means (5") for detecting a change in the steering angle of the steering system of the motor vehicle (1), which means generate the signal indicating an intention to switch lanes whenever a change in steering angle is detected.

9. Motor vehicle according to claim 8,
**characterised in that** the haptically perceptible signal is given in dependence upon at least one information signal from a lane monitoring system serving as a reference point for the change in steering angle, more particularly an information signal from a lane departure warning system.

10. Motor vehicle according to claim 6,
**characterised by** the provision of means for lane detection and monitoring, more particularly a lane departure warning system, which generate the signal indicating an intention to switch lanes whenever a lane departure is detected.

11. Motor vehicle according to any one of the preceding claims,
**characterised in that** the lane switching assistance system (2) is designed to ascertain the acceleration necessary, taking account of one or more vehicle-specific information signals.

12. Motor vehicle according to any one of the preceding claims,
**characterised in that** the lane switching assistance system (2) is designed to ascertain the acceleration necessary, taking account of one or more environment-specific information signals into account.

## Revendications

1. Véhicule équipé d'un système d'assistance pour changer de voie, pour détecter un creux dans le flux de véhicules d'une voie de circulation adjacente, qui comprend un dispositif de détection d'éventuels véhicules dans une zone englobant le côté et l'arrière du véhicule, ce système d'assistance pour changer de voie (2) étant conçu pour calculer une accélération minimale pour s'insérer sans danger dans un creux détecté, **caractérisé en ce qu'**est prévu un dispositif (6) d'émission d'un signal à l'attention du conducteur et perceptible au toucher, lequel signal indique l'accélération minimale à atteindre ou atteinte, cette dernière étant calculée en continu ; ce signal est émis une fois que l'accélération minimale requise a été atteinte pendant la phase d'accélération, ou bien il est émis pendant toute la phase d'accélération et ce, jusqu'à ce que l'accélération minimale soit atteinte.

2. Véhicule selon la revendication 1, **caractérisé en ce que** le dispositif (6) d'émission du signal est conçu sous la forme d'un point de pression ou d'un seuil de pression perceptible lors de la poussée de la pédale d'accélérateur (8).

3. Véhicule selon la revendication 2, **caractérisé en ce que** le dispositif (6) comprend un actionneur (7) pouvant être déclenché, en particulier un moteur électrique, lequel établit le point de pression ou le seuil de pression.

4. Véhicule selon la revendication 1, **caractérisé en ce que** le dispositif (6) d'émission du signal est conçu sous la forme d'un signal de vibration perceptible au niveau du volant (9) ou du siège conducteur.

5. Véhicule selon l'une des revendications précédentes, **caractérisé en ce qu'**est prévu un dispositif d'information (3, 4) signalant, de manière optique et/ou acoustique, une insertion possible dans le creux lors d'une accélération simultanée.

6. Véhicule selon l'une des revendications précédentes, **caractérisé en ce que** le dispositif (6) est conçu pour émettre le signal perceptible au toucher que lors de l'existence d'un signal indiquant une intention de changer de voie.

7. Véhicule selon la revendication 6, **caractérisé en ce que** le signal indiquant une intention de changer de voie est émis par actionnement du clignotant (5').

8. Véhicule selon la revendication 6, **caractérisé en ce que** sont prévus des moyens (5") de détection d'une modification de l'angle de direction du dispositif de direction du véhicule (1), lesquels émettent le signal indiquant une intention de changer de voie en cas de détection d'une modification de l'angle de direction.

9. Véhicule selon la revendication 8, **caractérisé en ce que** l'émission du signal perceptible au toucher survient en fonction d'au moins un signal d'information d'un système de surveillance des voies de circulation,- celui-ci servant de point de repère pour la modification de l'angle de direction, en particulier d'un signal d'information d'un système avertisseur de sortie de voie (Lâne-Departure-Warning-System).

10. Véhicule selon la revendication 6, **caractérisé en ce que** sont prévus des moyens de détection et de surveillance de la voie de circulation, en particulier un système avertisseur de sortie de voie, qui émettent le signal indiquant une intention de changer de voie en cas de détection d'une sortie de la voie de circulation.

11. Véhicule selon l'une des revendications précédentes, **caractérisé en ce que** le système d'assistance pour changer de voie (2) est conçu pour calculer l'accélération nécessaire en tenant compte d'un ou de plusieurs signaux d'information spécifiques au véhicule.

12. Véhicule selon l'une des revendications précédentes, **caractérisé en ce que** le système d'assistance pour changer de voie (2) est conçu pour calculer l'accélération nécessaire en tenant compte d'un ou de plusieurs signaux d'information spécifiques à l'environnement.
